# EUROPÄISCHE PATENTSCHRIFT

(11) **EP 2 427 265 B1**
(45) Veröffentlichungstag und Bekanntmachung des Hinweises auf die Patenterteilung: **04.01.2017**
(21) Anmeldenummer: 10739859.6
(22) Anmeldetag: 22.07.2010
(51) Int. Cl.: B01D 69/02, B01D 69/12, B01D 67/00, H01M 8/1023, H01M 8/1053, H01M 8/1072, H01M 8/1081, H01M 8/1086

(54) **PERFORIERTE MEMBRANEN**
PERFORATED MEMBRANES
MEMBRANES PERFORÉES

(30) Priorität: 24.07.2009 DE 102009034575
(43) Veröffentlichungstag der Anmeldung: 14.03.2012
(73) Patentinhaber: Universität Bielefeld, 33615 Bielefeld (DE)
(72) Erfinder: GÖLZHÄUSER, Armin, 33615 Bielefeld (DE); EDINGER, Klaus, 64653 Lorsch (DE)
(74) Vertreter: Müller-Boré & Partner Patentanwälte PartG mbB
(86) Internationale Anmeldenummer: PCT/EP2010/004504
(87) Internationale Veröffentlichungsnummer: WO 2011/009621

(56) Entgegenhaltungen:
- DE-A1- 10 058 258
- ZIMNITSKY D ET AL: "Perforated, freely suspended layer-by-layer nanoscale membranes" LANGMUIR 20080617 AMERICAN CHEMICAL SOCIETY US, Bd. 24, Nr. 12, 17. Juni 2008 (2008-06-17) , Seiten 5996-6006, XP002608915 DOI: DOI:10.1021/LA7038575
- TURCHANIN A ET AL: "Fabrication of molecular nanotemplates in self-assembled monolayers by extreme-ultraviolet-induced chemical lithography" SMALL DECEMBER 2007 WILEY-VCH VERLAG DE, Bd. 3, Nr. 12, Dezember 2007 (2007-12), Seiten 2114-2119, XP002608916 DOI: DOI:10.1002/SMLL.200700516
- ECK W ET AL: "Freestanding nanosheets from crosslinked biphenyl self-assembled monolayers" ADVANCED MATERIALS 20051104 WILEY-VCH VERLAG DE, Bd. 17, Nr. 21, 4. November 2005 (2005-11-04), Seiten 2583-2587, XP002608917 DOI: DOI:10.1002/ADMA.200500900 in der Anmeldung erwähnt
- SCHNIETZ M ET AL: "Chemically functionalized carbon nanosieves with 1-nm thickness" SMALL 20091204 WILEY-VCH VERLAG DEU, Bd. 5, Nr. 23, 4. Dezember 2009 (2009-12-04), Seiten 2651-2655, XP002608918 DOI: DOI:10.1002/SMLL.200901283
- Piotr Cyganik ET AL: "Self-Assembled Monolayers of [omega]-Biphenylalkanethiols on Au(111): Influence of Spacer Chain on Molecular Packing", The Journal of Physical Chemistry B, vol. 108, no. 16, 1 April 2004 (2004-04-01), pages 4989-4996, XP055199961, ISSN: 1520-6106, DOI: 10.1021/jp037307f
- S. FREY ET AL: 'Structure of Thioaromatic Self-Assembled Monolayers on Gold and Silver' LANGMUIR Bd. 17, Nr. 8, 01 April 2001, Seiten 2408 - 2415, XP055199960 DOI: 10.1021/la001540c ISSN: 0743-7463
- K. Edinger ET AL: "Formation of self-assembled monolayers of n-alkanethiols on gold: a scanning tunneling microscopy study on the modification of substrate morphology", Langmuir, vol. 9, no. 1, 1 January 1993 (1993-01-01) , pages 4-8, XP055199964, ISSN: 0743-7463, DOI: 10.1021/la00025a002
- HIMMEL H-J ET AL: "Fabrication of a Carboxyl-Terminated Organic Surface with Self-Assembly of Functionalized Terphenylthiols: The Importance of Hydrogen Bond Formation", JOURNAL OF THE AMERICAN CHEMICAL SOCIETY, AMERICAN CHEMICAL SOCIETY, US, vol. 120, no. 46, 1 January 1998 (1998-01-01), pages 12069-12074, XP002301744, ISSN: 0002-7863, DOI: 10.1021/JA981872S

## Beschreibung

Die vorliegende Erfindung betrifft eine Membran, welche mindestens eine molekulare Monoschicht umfasst, die aus niedermolekularen Aromaten aufgebaut und in lateraler Richtung vernetzt ist, wobei die Membran eine Dicke im Bereich von 1 bis 200 nm und eine Perforation in Form von Öffnungen mit einem Durchmesser im Bereich von 0,1 nm bis 1 µm aufweist, ein Verfahren für deren Herstellung sowie deren Verwendung.

Im Rahmen der vorliegenden Erfindung werden unter Membranen semipermeable Flächengebilde verstanden. Solche Membranen weisen Poren bzw. Öffnungen auf, die sich von einer Hauptoberfläche zur anderen Hauptoberfläche der Membran erstrecken. Herkömmliche Membranen bestehen aus Polymeren, wie beispielsweise Polyethersulfonen, Celluloseacetaten, Polyvinylidenfluoriden, Polypropenen, Polyethenen, Polytetrafluorethenen und Polyamiden, und weisen üblicherweise eine Dicke im Bereich von 5 bis 500 µm auf.

Im Allgemeinen werden semipermeable Membranen als Membranfilter oder als Adsorptionsmembranen verwendet. Bei einem Membranfilter handelt es sich um eine Membran, bei der die Stofftrennung durch die Porengröße bestimmt wird. Dabei können nur solche Moleküle die Membran passieren, deren Durchmesser kleiner als der Durchmesser der Poren der Membran ist. Dagegen erfolgt bei Adsorptionsmembranen die Abtrennung von bestimmten Stoffen, indem diese an geeignete Liganden der Membran gebunden werden, während ein diese Stoffe enthaltendes Medium die Membran durchströmt. Darüber hinaus sind semipermeable Membranen bekannt, bei denen durch chemische Funktionalisierung nur bestimmte Stoffe durch die Poren gehen bzw. diffundieren (analog zu Zellmembranen).

Für die praktische Anwendungen dieser Membranen ist es wünschenswert, dass das Membranmaterial mechanisch stabil sowie thermisch und chemisch beständig ist. Darüber hinaus wird versucht, immer dünnere Membranen herzustellen und in verschiedenen technischen Bereichen zum Einsatz zu bringen. Jedoch ist die Verringerung der Dicke von Membranen im Allgemeinen mit einer Verschlechterung der mechanischen Stabilität verbunden. Es wurden zwar molekulare Monoschichten mit einer Dicke im Bereich weniger Nanometer beschrieben. Diese sind jedoch nicht als Membranfilter oder Adsorptionsmembran geeignet.

DE 100 58 258 A1 offenbart eine poröse Membran aus einem polymeren Substrat, wobei der Porendurchmesser kleiner als 100 nm ist und die Standardabweichung der Porendurchmesser unter 20% des mittleren Durchmessers beträgt und keine Überlappung zwischen einzelnen Poren auftritt. In D. Zimnitsky et al., Langmuir 2008, 24, 5996-6006 werden nanoporöse Polymermembranen beschrieben, welche durch ein LbL- (Layer-by-Layer) Verfahren gebildet werden. Der Artikel von A. Turchanin et al. small 2007, 12, 2114-2119 beschreibt die Herstellung molekularer Nanotemplate in selbstorganisierenden Monoschichten (self-assembled monolayer - SAM) durch EUV-Interferenzlithographie (extreme-UV interference lithography). Der Artikel von W. Eck et al. Adv. Mater. 2005, 17, 2583-2587 beschreibt freistehende Monoschichten, welche aus vernetzten, selbstorganisierenden Biphenylen hergestellt werden.

Der vorliegenden Erfindung liegt daher die Aufgabe zugrunde, eine Membran bereitzustellen, die eine Dicke im Nanometerbereich aufweist und damit dünner als herkömmliche Membranen ist, die mechanisch äußerst stabil sowie thermisch und chemisch beständig ist, und die als Membranfilter und/oder Adsorptionsmembran zur Stofftrennung befähigt ist.

Diese Aufgabe wird durch die in den Ansprüchen gekennzeichneten Ausführungsformen gelöst.

Insbesondere betrifft die vorliegende Erfindung ein Verfahren zum Herstellen einer Membran, welche mindestens eine molekulare Monoschicht umfasst, die aus niedermolekularen Aromaten aufgebaut und in lateraler Richtung vernetzt ist, wobei die Membran eine Dicke im Bereich von 1 bis 200 nm und eine Perforation in Form von mindestens 10³ Öffnungen mit einem Durchmesser, gemessen mittels Transmissionselektronenmikroskopie, im Bereich von 0,1 nm bis 1 µm pro mm² der Oberfläche der Membran aufweist, wobei die Öffnungen nicht mehr als 80% der Oberfläche der Membran ausmachen, und wobei die molekulare Monoschicht aus Aromaten, ausgewählt aus der Gruppe, bestehend Phenyl, Biphenyl, Terphenyl, Naphthalin, Anthracen, Bipyridin, Terpyridin, Thiophen, Bithienyl, Terthienyl, Pyrrol und Kombinationen davon, aufgebaut ist, wobei das Verfahren die Schritte umfasst:
(a) das Bereitstellen eines Substrates,
(b) das Aufbringen einer Monoschicht aus niedermolekularen Aromaten unter Bindung auf mindestens eine Oberfläche des Substrates,
(c) das Behandeln des in Schritt (b) erhaltenen Substrates mit energiereicher Strahlung derart, dass die aus niedermolekularen Aromaten aufgebaute Monoschicht in lateraler Richtung vernetzt wird, und
(d) das Entfernen des Substrates, um die Membran zu erhalten,
   wobei das Verfahren weiter während Schritt (c) oder nach einem der vorstehend genannten Schritte (c) und (d) den Schritt umfasst:
(e) das gezielte Perforieren der Membran, welches derart erfolgt, dass Öffnungen mit einem Durchmesser im Bereich von 0,1 nm bis 1 µm erzeugt werden,
und gegebenenfalls weiter den Schritt des übereinander Anordnens von mindestens zwei perforierten molekularen Monoschichten, um einen Stapel zu bilden,
wobei das Perforieren zwischen den Schritten (c) und (d) oder nach dem Schritt (d) durch Bestrahlung mit Teilchenstrahlung, ausgewählt aus der Gruppe, bestehend aus Elektronenstrahlung und Ionenstrahlung, erfolgt, oder
wobei das Perforieren dadurch erfolgt, dass die Vernetzung in Schritt (c) derart unvollständig erfolgt, dass eine Monoschicht mit vernetzten und unvernetzten Bereichen gebildet wird, wobei die unvernetzten Bereiche der Monoschicht entfernt werden, wodurch die Perforation ausgebildet wird.

Zudem wird eine Membran bereitgestellt, welche mindestens eine molekulare Monoschicht umfasst, die aus niedermolekularen Aromaten aufgebaut und in lateraler Richtung vernetzt ist, wobei die Membran eine Dicke im Bereich von 1 bis 200 nm und eine Perforation in Form von mindestens 10³ Öffnungen mit einem Durchmesser, gemessen mittels Transmissionselektronenmikroskopie, im Bereich von 0,1 nm bis 1 µm pro mm² der Oberfläche der Membran aufweist, und wobei die Öffnungen nicht mehr als 80% der Oberfläche der Membran ausmachen, hergestellt nach dem vorstehend beschriebenen Verfahren.

Im Rahmen der vorliegenden Erfindung wird unter einer "molekularen Monoschicht" eine Schicht verstanden, die lediglich die Dicke eines Moleküls aufweist. Diese Monoschicht ist erfindungsgemäß aus niedermolekularen Aromaten aufgebaut. In Abhängigkeit von dem verwendeten Aromaten kann die molekulare Monoschicht jede geeignete Dicke aufweisen. Vorzugsweise weist eine solche molekulare Monoschicht eine Schichtdicke im Bereich von 0,1 nm bis 10 nm auf, besonders bevorzugt im Bereich von 0,3 nm bis 3 nm, noch bevorzugter im Bereich von 1 bis 2 nm.

Die erfindungsgemäße Membran weist dagegen eine Dicke im Bereich von 1 bis 200 nm auf. Beträgt die Dicke weniger als 1 nm, ist die Membran schwierig zu handhaben und nicht ausreichend reißfest. Beträgt die Dicke dagegen mehr als 200 nm, wird der Herstellungsprozess zu aufwändig und eine ausreichende Durchlässigkeit ist nicht mehr gegeben. In einer bevorzugten Ausführungsform weist die erfindungsgemäße Membran eine Dicke im Bereich von 1 bis 50 nm auf, noch bevorzugter ist eine Dicke im Bereich von 1 bis 20 nm. Besonders bevorzugt weist die erfindungsgemäße Membran eine Dicke im Bereich von 1 bis 2 nm auf. Da die erfindungsgemäße Membran eine Dicke im Nanometerbereich aufweist, wird diese nachfolgend auch als Nanomembran bezeichnet. Die Dicke der Monoschicht bzw. der erfindungsgemäßen Membran kann durch dem Fachmann bekannte Verfahren, beispielsweise mittels Rasterkraftmikroskopie (AFM), bestimmt werden.

Um eine Dicke der Membran im Bereich von 1 bis 200 nm zu erhalten, ist es gegebenenfalls notwendig, zwei oder mehrere molekulare Monoschichten übereinander in Form eines Stapels anzuordnen. In einer bevorzugten Ausführungsform ist die erfindungsgemäße Membran daher aus einem Stapel von mindestens zwei übereinander angeordneten molekularen Monoschichten aufgebaut. Vorzugsweise werden dabei 2 bis 100 Monoschichten übereinander angeordnet, besonders bevorzugt werden 2 bis 50, noch bevorzugter 2 bis 10 Monoschichten übereinander angeordnet.

Im Rahmen der vorliegenden Erfindung werden unter dem Begriff "niedermolekulare Aromaten" solche aromatische Verbindungen verstanden, die nicht in oligomerer oder polymerer Form vorliegen. Dieser Begriff schließt weiterhin die Möglichkeit ein, dass die Aromaten nach Behandlung mit energiereicher Strahlung miteinander vernetzt sind. Im Rahmen der vorliegenden Erfindung ist die Monoschicht aus Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebaut. In einer besonders bevorzugten Ausführungsform der vorliegenden Erfindung ist die Monoschicht aus Biphenyl aufgebaut. Dies ist besonders vorteilhaft hinsichtlich der Vernetzbarkeit in lateraler Richtung. Außerdem sind aus Biphenyl aufgebaute Monoschichten mechanisch äußerst stabil. Es ist aber auch möglich, dass die Monoschicht zumindest zwei verschiedenen Aromaten enthält. So kann beispielsweise ein Bereich der Monoschicht aus Biphenyl aufgebaut sein, während ein anderer Bereich der Monoschicht aus Bipyridin aufgebaut ist.

Die Monoschicht gemäß der vorliegenden Erfindung ist in lateraler Richtung vernetzt. Durch die Vernetzung in lateraler Richtung erlangt die aus den niedermolekularen Aromaten aufgebaute Monoschicht hohe mechanische und chemische Stabilität. Vorzugsweise ist die Monoschicht durch Behandlung mit Elektronenstrahlung, Plasmastrahlung, Röntgenstrahlung, β-Strahlung, γ-Strahlung, UV-Strahlung oder EUV-Strahlung ("Extremes UV", mit einem Spektralbereich zwischen etwa 1 nm und etwa 50 nm) vernetzt.

Die erfindungsgemäße Membran weist eine Perforation auf. Im Rahmen der vorliegenden Erfindung wird unter einer Perforation verstanden, dass die Membran Öffnungen bzw. Poren aufweist, die sich von einer Hauptoberfläche zur anderen Hauptoberfläche der Membran erstrecken. Diese Öffnungen haben einen Durchmesser im Bereich von 0,1 nm bis 1 µm. In einer bevorzugten Ausführungsform der vorliegenden Erfindung weisen die Öffnungen einen Durchmesser im Bereich von 0,1 nm bis 100 nm auf. In einer anderen bevorzugten Ausführungsform weisen die Öffnungen einen Durchmesser im Bereich von 100 nm bis 1 µm auf. Je nach Größe der abzutrennenden Moleküle und Art der Abtrennung kann hier eine geeignete Porengröße bzw. Größe der Öffnungen gewählt werden. Die Porengröße wird erfindungsgemäß durch Transmissionselektronenmikroskopie (TEM) vermessen. Der Radius kreisförmiger Poren kann dabei ebenso bestimmt werden, wie Form und Fläche der Öffnung bei nicht-kreisförmigen Poren.

Weiterhin schließt der Begriff "Perforation" eine gerichtete Perforation ein. Unter einer gerichteten bzw. gezielten Perforation wird erfindungsgemäß eine Perforation verstanden, für die ein zielgerichtetes Handeln notwendig ist, um die Poren in der Membran zu bilden. Dies kann beispielsweise durch chemische oder physikalische Verfahren erfolgen.

Je größer die Anzahl der Öffnungen ist, desto größer ist auch die Durchlässigkeit der Membran. Erfindungsgemäß weist die Membran mindestens 10³ Öffnungen pro mm² der Oberfläche der Membran als Perforation auf. Umfasst die Membran weniger als 10³ Öffnungen, so ist kein ausreichender Durchfluss sichergestellt, was eine Stofftrennung unter Verwendung der erfindungsgemäßen Membran erschwert. In einer besonders bevorzugten Ausführungsform weist die Membran 10³ bis 10¹² Öffnungen pro mm² der Oberfläche der Membran als Perforation auf. Weiterhin bevorzugt weist die Membran mindestens 10⁸ Öffnungen pro mm² der Oberfläche der Membran als Perforation auf. Besteht die erfindungsgemäße Membran aus mehr als einer molekularen Monoschicht, so bilden die Öffnungen in den einzelnen Monoschichten gemeinsam die Öffnungen bzw. Poren der gesamten Membran.

In einer weiteren bevorzugten Ausführungsform der vorliegenden Erfindung machen die Poren, d.h. die Öffnungen, mindestens 5% der Oberfläche der Membran aus. Besonders bevorzugt bestehen mindestens 10%, noch bevorzugter mindestens 20% der Oberfläche der Membran aus Öffnungen. Jedoch bestehen nicht mehr als 80% der Oberfläche der Membran aus Öffnungen. Wird dieser Wert überschritten, so ist eine ausreichende mechanische Stabilität der Membran nicht mehr gewährleistet.

In einer weiteren bevorzugten Ausführungsform der vorliegenden Erfindung ist eine der beiden Oberflächen von mindestens einer molekularen Monoschicht durch funktionelle Gruppen modifiziert. Dabei sind die funktionellen Gruppen jeweils an die Aromaten gebunden. Die funktionellen Gruppen können alle funktionellen Gruppen sein, die durch die Bestrahlung nicht abgespalten werden, und die zur weiteren Umsetzung geeignet sind, beispielsweise um weitere Moleküle an die Monoschicht reversibel oder irreversibel anzubinden. Vorzugsweise sind die funktionellen Gruppen aus Aminogruppen, Nitrogruppen, Carboxygruppen, Cyanogruppen, Thiolgruppen, Hydroxygruppen und Kombinationen davon ausgewählt. In einer besonders bevorzugten Ausführungsform ist eine der beiden Oberflächen von mindestens einer molekularen Monoschicht durch Aminogruppen als funktionelle Gruppen modifiziert. In einer weiteren besonders bevorzugten Ausführungsform sind die funktionellen Gruppen spezielle Liganden, die zur Bindung von bestimmten Zielmolekülen geeignet sind. Diese Liganden können durch Modifzierung der vorstehend genannten Aminogruppen, Nitrogruppen, Carboxygruppen, Cyanogruppen, Thiolgruppen oder Hydroxygruppen an die molekulare Monoschicht gebunden sein. Beispiele für solche Liganden sind Ionentauscher, Chelatbildner, Aminosäuren, Coenzyme, Cofaktoren und deren Analoga, endokrine und exokrine Substanzen, wie Hormone, Enzym-Substrate, Enzym-Inhibitoren, Nukleinsäuren, wie DNA und RNA, Viren, und Polypeptide, wie Proteine, insbesondere Antikörper und Enzyme.

Die Oberfläche der Monoschicht ist vorzugsweise im Wesentlichen vollständig durch funktionelle Gruppe modifiziert, d.h. im Wesentlichen alle Aromaten der Monoschicht tragen eine funktionelle Gruppe. Es ist aber auch möglich, dass nur ein Teil der Oberfläche durch funktionelle Gruppen modifiziert ist. In diesem Fall kann die Oberfläche ein Muster aus funktionellen Gruppen aufweisen. Unter einem Muster aus funktionellen Gruppen wird im Rahmen der vorliegenden Erfindung eine chemische Strukturierung der Oberfläche bezeichnet, wobei die funktionellen Gruppen diese chemische Strukturierung unter Ausbildung des gewünschten Musters auf der Oberfläche der Monoschicht darstellen. Diese Strukturierung bzw. dieses Muster wird durch teilweise Funktionalisierung der Oberfläche mit funktionellen Gruppen erhalten. Insbesondere kann auf diese Weise eine Monoschicht mit einem zielgerichteten Muster aus funktionellen Gruppen erhalten werden.

Die Verwendung einer durch funktionelle Gruppen modifizierten Membran ist insbesondere dann vorteilhaft, wenn die Membran als Adsorptionsmembran zur Abtrennung von bestimmten Stoffen verwendet werden soll. Solche Stoffe können beispielsweise Substanzen sein, die aus einem Medium in angereicherter oder reiner Form gewonnen werden sollen. Dies können beispielsweise rekombinante Proteine sein. Es ist aber auch möglich, dass die zu absorbierenden Stoffe Kontaminanten sind, die aus einem Medium entfernt werden sollen. Dies können beispielsweise Viren, Proteine, Aminosäuren, Nukleinsäuren oder Endotoxine sein. Dabei ist die funktionelle Gruppe derart auszuwählen, dass sie geeignet ist, den zu absorbierenden Stoff reversibel oder irreversibel zu binden. Soll eine Substanz aus einem Medium isoliert werden, so ist es vorteilhaft, wenn die Bindung dieser Substanz an die funktionelle Gruppe reversibel erfolgt.

Auch wenn die abzutrennenden Moleküle nicht an den funktionellen Gruppen adsorbiert werden, können diese funktionellen Gruppen dennoch die Diffusion dieser Moleküle beeinflussen. Auf diese Weise lässt sich ebenfalls die Selektivität der Membran für bestimmte Stoffe einstellen.

Besteht die erfindungsgemäße Membran aus mehr als einer molekularen Monoschicht, so kann eine oder mehrere der molekularen Monoschichten durch funktionelle Gruppen modifiziert sein. In einer bevorzugten Ausführungsform sind alle molekularen Monoschichten in einer erfindungsgemäßen Membran, die aus mehr als einer molekularen Monoschicht aufgebaut ist, durch funktionelle Gruppen modifiziert. Dies ermöglicht eine hohe Konzentration an funktionellen Gruppen auf bzw. in der Membran, was beispielsweise vorteilhaft hinsichtlich der Absorptionskapazität bei einer Verwendung als Absorptionsmembran ist.

In einer weiteren bevorzugten Ausführungsform kann die erfindungsgemäße Membran weiter eine zusätzliche Beschichtung aufweisen. Diese Beschichtung sollte dabei allerdings nicht die Öffnungen vollständig verschließen, damit weiterhin eine Durchlässigkeit der Membran gegeben ist. Die Beschichtung kann beispielsweise eine Metallbeschichtung sein. Vorzugsweise handelt es sich bei der Beschichtung um eine Beschichtung aus Gold. Die Beschichtung kann jede geeignete Dicke aufweisen. Vorzugsweise weist die Beschichtung jedoch eine Dicke im Bereich von 1 nm bis 10 nm auf, besonders bevorzugt im Bereich von 2 nm bis 5 nm. Eine solche zusätzliche Beschichtung ermöglicht beispielsweise eine bessere Abbildbarkeit der Oberfläche der Membran im Elektronenmikroskop. Darüber hinaus kann diese zusätzliche Beschichtung die mechanische Stabilität der Membran erhöhen.

Die erfindungsgemäße Membran kann durch eines der nachfolgend beschriebenen Verfahren hergestellt werden.

Insbesondere betrifft die vorliegende Erfindung ein Verfahren zum Herstellen einer Membran, welche mindestens eine molekulare Monoschicht umfasst, die aus niedermolekularen Aromaten aufgebaut und in lateraler Richtung vernetzt ist, wobei die Membran eine Dicke im Bereich von 1 bis 200 nm und eine Perforation in Form von mindestens 10³ Öffnungen mit einem Durchmesser im Bereich von 0,1 nm bis 1 µm pro mm² der Oberfläche der Membran aufweist, wobei die Öffnungen nicht mehr als 80% der Oberfläche der Membran ausmachen, wobei das Verfahren die Schritte umfasst:
(a) das Bereitstellen eines Substrates,
(b) das Aufbringen einer Monoschicht aus niedermolekularen Aromaten unter Bindung auf mindestens eine Oberfläche des Substrates,
(c) das Behandeln des in Schritt (b) erhaltenen Substrates mit energiereicher Strahlung derart, dass die aus niedermolekularen Aromaten aufgebaute Monoschicht in lateraler Richtung vernetzt wird, und
(d) das Entfernen des Substrates, um die Membran zu erhalten,
   wobei das Verfahren weiter während Schritt (c) oder nach einem der vorstehend genannten Schritte (c) und (d) den Schritt umfasst:
(e) das gezielte Perforieren der Membran, welches derart erfolgt, dass Öffnungen mit einem Durchmesser im Bereich von 0,1 nm bis 1 µm erzeugt werden.

Das vorstehend beschriebene Verfahren beschreibt ein Herstellungsverfahren für die erfindungsgemäße Membran, bei dem die Perforation gerichtet bzw. gezielt erfolgt. Dieses Verfahren umfasst daher den Schritt (e) des Perforierens der Membran, wodurch die Poren zielgerichtet gebildet werden.

In einer bevorzugten Ausführungsform der vorliegenden Erfindung erfolgt das Perforieren zwischen den Schritten (c) und (d) oder nach dem Schritt (d) durch Bestrahlung mit Teilchenstrahlung, ausgewählt aus der Gruppe, bestehend aus Elektronenstrahlung und Ionenstrahlung. Dieses Verfahren wird nachfolgend auch als Perforierungsverfahren (1) bezeichnet.

Bei dem Perforierungsverfahren (1) wird zunächst eine intakte Membran hergestellt, die entweder noch an das Substrat gebunden oder aber nach Entfernung des Substrates in Schritt (d) frei vorliegen kann. Diese Membran wird dann durch Bestrahlung mit Teilchenstrahlung perforiert. Dazu ist es notwendig, dass diese Strahlung eine passende Energie und Dosis aufweist, um in der Membran Öffnungen zu erzeugen. Sind Energie und Dosis zu hoch, kann die Membran zerreissen. Ist die Energie zu niedrig, muss zu lange belichtet werden. Vorzugsweise wird Strahlung aus einem Bereich von 5V bis 50kV verwendet, da zum Perforieren von dünnen Membranen nur geringe Strahlungsdosen genügen.

Dies kann beispielsweise mittels feinfokussierter Elektronenstrahlung oder Ionenstrahlung erfolgen. Die Fokussierung und das Rastern des Strahls über die zu strukturierenden Bereiche kann durch elektronenoptische oder ionenoptische Elemente geschehen, wie beispielsweise bei der Elektronenstrahllithographie mit Rasterelektronen-mikroskopen oder der Lithographie mit fokussierten Ionen (FIB). Die Erzeugung von Öffnungen in der Nanomembran kann auch mittels Nahsondenverfahren durchgeführt werden. Die Fokussierung von Elektronen oder Ionen ist bei diesen durch die Kleinheit der Elektronen- oder Ionenquelle (Nahsonde) gewährleistet. Die Nahsonde wird dann in Abständen zwischen 0,1 und 1000 nm über die zu strukturierenden Bereiche geführt. Als Nahsonde für Elektronen eignen sich insbesondere die Spitzen von Rastertunnelmikroskopen (STM), Rasterkraftmikroskopen (AFM) und atomar definierte Feldemitterspitzen, die z.B. nach dem in Müller et al., Ultramicroscopy 1993, 50, 57 beschriebenen Verfahren hergestellt wurden. Letztere eignen sich besonders als Nahsonden zur Perforierung bei größeren Abständen (> 10 nm) zwischen Sonde und Probe und können auch als Quellen für Feldionen verwendet werden.

Es ist aber auch möglich, die Öffnungen durch Bestrahlung mit Teilchenstrahlung in Verbindung mit einer Lochmaske derart herzustellen, dass nur räumlich definierte Bereiche der auf der Membran bestrahlt werden, wodurch die Öffnungen an den bestrahlten Stellen erzeugt werden. Dazu kann beispielsweise eine großflächig ausleuchtende Elektronenquelle in Verbindung mit einer Lochmaske verwendet werden, so dass nur die offenen Bereiche den Elektronen ausgesetzt werden.

In einer anderen bevorzugten Ausführungsform der vorliegenden Erfindung erfolgt das Perforieren dadurch, dass die Vernetzung in Schritt (c) derart unvollständig erfolgt, dass eine Monoschicht mit vernetzten und unvernetzten Bereichen gebildet wird, wobei die unvernetzten Bereiche der Monoschicht entfernt werden, wodurch die Perforation ausgebildet wird. Dies kann beispielsweise durch eines der nachfolgend dargestellten Perforierungsverfahren (2) bis (5) erfolgen.

Bei dem Perforierungsverfahren (2) erfolgt die Perforation der Nanomembran bereits während der Vernetzung in Schritt (c) des erfindungsgemäßen Verfahrens. Dabei wird nicht die gesamte Monoschicht mittels Strahlung vernetzt, sondern lediglich ein bestimmter Bereich. Auf diese Weise wird eine mit einem Muster aus vernetzten (d.h. zuvor bestrahlten) und nicht-vernetzten (d.h. zuvor nicht bestrahlten) Bereichen erzeugt. Die niedermolekularen Aromaten der nicht-vernetzten Bereiche weisen im Wesentlichen keine Bindungen zu den vernetzten Bereichen der Monoschicht auf und lassen sich daher nach Entfernung des Substrates leicht entfernen. Entsprechende Verfahren sind dem Fachmann bekannt. Dies kann beispielsweise durch einfaches Auswaschen der nicht-vernetzten niedermolekularen Aromaten erfolgen. An den nicht-vernetzten Bereichen bilden sich dann die Öffnungen in der Monoschicht

Wird das Substrat beispielsweise durch naßchemisches Ätzen aufgelöst, fehlt den Molekülen in den nicht-vernetzen Bereichen die fixierende Unterlage. Da die Moleküle nicht untereinander vernetzt sind, gehen sie beim Ätzen des Substrates in Lösung und es entstehen Öffnungen. Das Auflösen eines Goldsubstrates kann beispielsweise durch Einlegen in eine KCN-Lösung erfolgen. Das Auflösen eines SiN-Substrates kann beispielsweise durch HF erfolgen, das Auflösen von Si kann beispielsweise durch KOH erfolgen.

Das selektive Vernetzen kann beispielsweise unter Bildung einer Strukturierung mittels feinfokussierter ionisierender Elektronen-, Ionen- oder Photonenstrahlung durchgeführt werden. In einer bevorzugten Ausführungsform dieses Verfahrens wird das Behandeln mit energiereicher Strahlung unter Verwendung eines lithographischen Verfahrens derart durchgeführt, dass nur räumlich definierte Bereiche der auf der Substratoberfläche aufgebrachten Monoschicht bestrahlt werden, wodurch eine strukturierte Oberfläche auf dem Substrat entsteht. Zur Vernetzung mit lateraler Strukturierung mittels elektromagnetischer Strahlung (z.B. Röntgenstrahlung, UV-Strahlung, EUV-Strahlung) bieten sich im Stand der Technik verfügbare Lichtquellen in Verbindung mit für den jeweiligen Wellenlängenbereich geeigneten Masken oder das Abrastern mittels geeigneter Lichtleiter an. In einer weiteren bevorzugten Ausführungsform des erfindungsgemäßen Verfahrens erfolgt die Strukturierung durch eine großflächig ausleuchtende Elektronenquelle in Verbindung mit einer Lochmaske, so dass nur die offenen Bereiche den Elektronen ausgesetzt werden.

In einer besonders bevorzugten Ausführungsform des erfindungsgemäßen Verfahrens erfolgt die Vernetzung durch die Ausleuchtung einer Fläche mittels kohärenter EUV-Strahlung, wobei zwei oder mehr kohärente EUV-Strahlen auf der Oberfläche der Monoschicht ein Interferenzmuster aus stehenden Wellen erzeugen, welches zu einer selektiven Belichtung und damit einer Strukturierung führt. Diese EUV-Interferenzlithographie (EUV-IL) kann mit Wellenlängen im Bereich von 600 nm bis 6 nm, vorzugsweise im Bereich von etwa 13 nm, durchgeführt werden. Auf diese Weise können Muster mit Lochgrößen im Bereich von etwa 1 nm bis 100 nm, vorzugsweise im Bereich von etwa 5 nm, erzeugt werden.

Bei dem Perforierungsverfahren (3) entsteht die Perforation der Nanomembran aufgrund einer unvollständigen Vernetzung, beispielsweise in der Nähe von Defekten in der molekularen Monoschicht und/oder dem darunter liegenden Substrat.

Dabei wird ausgenutzt, dass eine homogene und defektfreie Membran nur dann erreicht wird, wenn bereits die Oberfläche des Substrates atomar flach und homogen vorliegt, d.h. dass sie beispielsweise keine Stufenversetzungen oder Defekte aufweist. Im Perforierungsverfahren (3) wird hingegen ein Substrat mit einer nicht-homogenen Oberflächenstruktur verwendet. Dazu kann beispielsweise ein Substrat mit einer rauhen Oberfläche verwendet werden. Damit bildet sich in Schritt (b) des erfindungsgemäßen Verfahrens keine homogene Monoschicht aus niedermolekularen Aromaten auf der Oberfläche des Substrates. Die anschließende Bestrahlung in Schritt (c) führt dann aufgrund der Inhomogenität der in Schritt (b) erhaltenen Monoschicht zu einer lokal unvollständigen Vernetzung. Wie im vorstehend beschriebenen Perforierungsverfahren (2) kann durch Entfernen der nicht-vernetzten niedermolekularen Aromaten aus der Membran eine perforierte Membran erhalten werden.

Bei dem Perforierungsverfahren (4) entsteht die Perforation durch einen Selbstaggregationsprozess auf einem vorstrukturierten Substrat. Dieses Substrat weist verschiedene Bereiche auf, auf denen die niedermolekularen Aromaten in unterschiedlicher Weise adsorbieren. In einem Bereich des Substrates, der mit einem bestimmten Material, wie beispielsweise Gold, beschichtet ist, adsorbieren die niedermolekularen Aromaten, beispielsweise Thiole, in geordneter Weise, in einem anderen Bereich, der nicht beschichtet ist, findet keine Adsorption der niedermolekularen Aromaten statt. Ebenso können Substrate mit Bereichen verschieden geordneter Oberflächenmorphologie verwendet werden. In den atomar glatten Regionen bilden sich geordnete Filme, während in den rauen Bereichen keine geordnete Adsorption stattfindet. Bei der nachfolgenden Bestrahlung in Schritt (c) des erfindungsgemäßen Verfahrens werden lediglich die geordneten Bereiche vernetzt, während die anderen Bereiche nicht-vernetzt werden. Wie im vorstehend beschriebenen Perforierungsverfahren (2) kann durch Entfernen der nicht-vernetzten niedermolekularen Aromaten aus der Membran eine perforierte Membran erhalten werden.

Bei dem Perforierungsverfahren (5) erfolgt die Perforation, indem in Schritt (b) des erfindungsgemäßen Verfahrens eine Monoschicht aus vernetzbaren niedermolekularen Aromaten und nicht-vernetzbaren Molekülen auf das Substrat aufgebracht wird. Dieses Verfahren kann auch als "chemische Perforation" bezeichnet werden. Dabei werden mindestens zwei Gruppen von Molekülen verwendet. Bei der ersten Gruppe handelt es sich um vernetzbare Moleküle, welche später die Membran bilden. Bei der anderen Gruppe handelt es sich um nicht-vernetzbare Moleküle, welche später die Löcher bilden. Bei der nachfolgenden Bestrahlung in Schritt (c) des erfindungsgemäßen Verfahrens werden lediglich die vernetzbaren niedermolekularen Aromaten vernetzt. Wie im vorstehend beschriebenen Perforierungsverfahren (2) kann durch Entfernen der nicht-vernetzten Moleküle aus der Membran eine perforierte Membran erhalten werden. Als nicht-vernetzbares Molekül kann beispielsweise Hexadecanthiol verwendet werden. Insbesondere kann beispielsweise ein Gemisch aus Biphenylthiol als vernetzbarer Aromat (90%) und Hexadecanthiol (10%) in Schritt (b) des erfindungsgemäßen Verfahrens verwendet werden. Insbesondere bevorzugt ist die Verwendung von nicht-vernetzbaren Molekülen, die durch Zusammenlagerung Cluster definierter Größe bilden können. Auf diese Weise ist es möglich, durch die geeignete Auswahl von nicht-vernetzbaren Molekülen eine definierte Porengröße kontrolliert einzustellen.

Der Fachmann ist in der Lage, die vorstehend beschriebenen Perforierungsverfahren (1) bis (5) derart durchzuführen, dass Öffnungen mit einem Durchmesser im Bereich von 0,1 nm bis 1 µm erhalten werden. In einer bevorzugten Ausführungsform der vorliegenden Erfindung werden Öffnungen mit einen Durchmesser im Bereich von 0,1 nm bis 100 nm erhalten. In einer anderen bevorzugten Ausführungsform werden Öffnungen mit einen Durchmesser im Bereich von 100 nm bis 1 µm erhalten. Je nach Größe der abzutrennenden Moleküle und Art der Abtrennung kann hier eine geeignete Porengröße bzw. Größe der Öffnungen gewählt werden.

Der Fachmann ist ebenfalls in der Lage, die vorstehend beschriebenen Perforierungsverfahren (1) bis (5) derart durchzuführen, dass eine Membran mit der gewünschten Anzahl an Öffnungen erhalten wird. Das Perforieren wird derart durchgeführt, dass die Membran mindestens 10³ Öffnungen pro mm² der Oberfläche der Membran als Perforation aufweist. Umfasst die Membran weniger als 10³ Öffnungen, so ist kein ausreichender Durchfluss sichergestellt, was eine Stofftrennung durch die mit dem erfindungsgemäßen Verfahren erhaltene Membran erschwert. Besteht die erfindungsgemäße Membran aus mehr als einer molekularen Monoschicht, so bilden die Öffnungen in den einzelnen Monoschichten gemeinsam die Öffnungen bzw. Poren der gesamten Membran.

Das in Schritt (a) des erfindungsgemäßen Verfahrens bereitgestellte Substrat weist zumindest eine Oberfläche auf und kann aus jedem geeigneten Material bestehen. Vorzugsweise ist das Substrat aus der Gruppe, bestehend aus Gold, Silber, Titan, Zirkonium, Vanadium, Chrom, Mangan, Wolfram, Molybdän, Platin, Aluminium, Eisen, Stahl, Silicium, Germanium, Indiumphosphid, Galliumarsenid, Siliciumnitrid und Oxiden oder Legierungen oder Mischungen derselben sowie Indium-Zinn-Oxid (ITO) und Silikat- oder Boratgläsern, ausgewählt. Besonders bevorzugt ist das Substrat mit Gold beschichtetes Silicium, das zwischen der Siliciumschicht und der Goldschicht noch eine Titangrundierung aufweist.

Vorzugsweise liegt die Oberfläche des Substrates atomar flach und homogen vor, d.h. dass sie beispielsweise keine Stufenversetzungen oder Defekte aufweist. Auf diese Weise ist es möglich, eine Membran zu erzeugen, die ebenfalls homogen und defektfrei vorliegt.

Um nachfolgend eine Monoschicht aus niedermolekularen Aromaten über Ankergruppen vorübergehend kovalent an das Substrat zu binden, kann die Substratoberfläche zuvor gegebenenfalls modifiziert werden. Die Modifizierung kann beispielsweise eine chemische Modifizierung und/oder eine Reinigung umfassen. Die Reinigung kann durch einfaches Abspülen der Oberfläche mit Wasser oder organischen Lösungsmitteln wie Ethanol, Aceton oder Dimethylformamid oder durch Behandlung mit einem durch UV-Strahlung erzeugten Sauerstoff-Plasma erfolgen. Besonders bevorzugt erfolgt zunächst eine Behandlung mit UV-Strahlung, gefolgt vom Abspülen mit Ethanol und abschließendem Trocknen in einem Stickstoffstrom. Wenn die Monoschichten mit Ankergruppen wie Phosphonsäure-, Carbonsäure- oder Hydroxamsäuregruppen auf oxidierten Metalloberflächen aufgebracht werden sollen, ist eine vorherige kontrollierte Oxidation der Metalloberfläche vorteilhaft. Diese kann durch Behandlung der Metalloberfläche mit oxidierenden Agentien wie Wasserstoffperoxid, Caro'scher Säure oder Salpetersäure erfolgen. Eine weitere Möglichkeit zur Modifizierung einer Substratoberfläche besteht im Aufbringen einer ersten organischen Monoschicht mit terminalen reaktiven Gruppen wie Amino-, Hydroxy-, Chlor-, Brom-, Carboxy-, oder Isocyanatgruppen, an die in einem zweiten Schritt die eigentlich zu vernetzende Monoschicht mittels geeigneter funktioneller Gruppen chemisch angekoppelt wird.

Anschließend wird in Schritt (b) des erfindungsgemäßen Verfahrens eine Monoschicht aus niedermolekularen Aromaten unter Bindung auf mindestens eine Oberfläche des Substrates aufgebracht. Diese Bindung kann durch Adsorption oder durch eine Bindung über Ankergruppen erfolgen. Vorzugsweise wird die Monoschicht unter kovalenter Bindung über Ankergruppen auf die Oberfläche des Substrates aufgebracht. Das Aufbringen der Monoschicht kann beispielsweise durch Tauch-, Gieß-, Spinschleuderverfahren oder durch Adsorption aus Lösung erfolgen. Derartige Verfahren sind im Stand der Technik bekannt. Erfindungsgemäß wird eine Monoschicht aus Aromaten, ausgewählt aus der Gruppe, bestehend aus Phenyl, Biphenyl, Terphenyl, Naphthalin, Anthracen, Bipyridin, Terpyridin, Thiophen, Bithienyl, Terthienyl, Pyrrol und Kombinationen davon, aufgebracht. In einer besonders bevorzugten Ausführungsform der vorliegenden Erfindung handelt es sich bei dem Aromaten um Biphenyl, das über eine Thiolgruppe an das Substrat kovalent gebunden wird.

In Schritt (c) des erfindungsgemäßen Verfahrens wird das in Schritt (b) erhaltene Substrat mit energiereicher Strahlung derart behandelt, dass die aus niedermolekularen Aromaten aufgebaute Monoschicht in lateraler Richtung vernetzt wird. Vorzugsweise wird die Monoschicht kovalent in lateraler Richtung vernetzt. Vorzugsweise erfolgt die Behandlung durch Elektronenstrahlung, Plasmastrahlung, Röntgenstrahlung, β-Strahlung, γ-Strahlung, UV-Strahlung oder EUV-Strahlung.

In einer bevorzugten Ausführungsform des erfindungsgemäßen Verfahrens kann zur Bestrahlung mit Elektronen eine großflächig ausleuchtende Elektronenquelle, z. B. eine "flood gun" oder ein Aufbau, wie in Abb. 2 von Hild et al., Langmuir 1998, 14, 342-346, beschrieben, verwendet werden. Die verwendeten Elektronenenergien können dabei in einem großen Bereich, vorzugsweise 1 bis 1000 eV, den jeweiligen organischen Filmen und ihren Substraten angepaßt werden. Beispielsweise kann zur Vernetzung von Biphenyl-4-thiol auf Gold Elektronenstrahlung mit 50 eV verwendet werden.

Zur großflächigen Vernetzung mittels elektromagnetischer Strahlung (z.B. Röntgenstrahlung, UV-Strahlung, EUV-Strahlung) können im Stand der Technik verfügbare Lichtquellen verwendet werden.

Werden in Schritt (b) anstelle einer Monoschicht aus niedermolekularen Aromaten beispielsweise gesättigte Moleküle bzw. Einheiten wie Cyclohexyl, Bicyclohexyl, Tercyclohexyl, partiell oder vollständig hydrierte Naphthaline oder Anthracene oder partiell oder vollständig hydrierte Heteroaromaten aufgebracht und kovalent mittels einer Ankergruppe an der Substratoberfläche gebunden, so kann im Wege der Behandlung mit energiereicher Strahlung in Schritt (c) neben der Vernetzung in lateraler Richtung eine Dehydrierung zu den entsprechenden Aromaten bzw. Heteroaromaten erfolgen.

In Schritt (d) des erfindungsgemäßen Verfahrens erfolgt anschließend das Entfernen des Substrates, um die Membran zu erhalten. Dies kann beispielsweise erfolgen, indem das Substrat durch Wegätzen aufgelöst wird, oder indem die Bindung zwischen Monoschicht und Substrat über die Ankergruppe chemisch gelöst wird. Entsprechende Verfahren zum Entfernen des Substrates von der Monoschicht sind im Stand der Technik bekannt. Bei Verwendung einer Thiolgruppe als Ankergruppe kann dies beispielsweise durch Behandlung mit Iod erfolgen (vgl. beispielsweise W. Eck et al., Adv. Mater. 2005, 17, 2583 - 2587). Nach Entfernung des Substrats liegt die molekulare Monoschicht dann in der Form einer Membran vor.

In einer bevorzugten Ausführungsform des erfindungsgemäßen Verfahrens werden zumindest teilweise niedermolekulare Aromaten, die mindestens eine funktionelle Gruppe aufweisen, verwendet, wodurch eine Membran erhalten wird, bei der eine der beiden Oberflächen der molekularen Monoschicht durch funktionelle Gruppen modifiziert ist.

Im Rahmen der vorliegenden Erfindung werden unter dem Begriff "Aromaten, die mindestens eine funktionelle Gruppe aufweisen" solche Aromaten verstanden, die mindestens eine funktionelle Gruppe aufweisen. Die funktionelle Gruppe kann jede funktionelle Gruppe sein, die durch die nachfolgende Bestrahlung nicht abgespalten wird, und die zur weiteren Umsetzung geeignet ist, beispielsweise um weitere Moleküle an die Monoschicht anzubinden. Vorzugsweise sind die funktionellen Gruppen aus Aminogruppen, Nitrogruppen, Carboxygruppen, Cyanogruppen, Thiolgruppen, Hydroxygruppen und Kombinationen davon ausgewählt. Besonders bevorzugt als funktionelle Gruppe ist die Nitrogruppe. In dem Fall einer Nitrogruppe erfolgt durch die Bestrahlung des Substrates mit energiereicher Strahlung in Schritt (c) zusätzlich zur Vernetzung eine Umwandlung der Nitrogruppen zu Aminogruppen. Es wird angenommen, dass dieser Reduktion zunächst eine C-H-Bindungsspaltung in den Aromaten vorangeht, und die frei gewordenen Wasserstoffatome anschließend die Nitrogruppen zu Aminogruppen reduzieren.

In einer weiteren besonders bevorzugten Ausführungsform sind die funktionellen Gruppen spezielle Liganden, die zur Bindung von bestimmten Zielmolekülen geeignet sind. Diese Liganden können durch Modifizierung der vorstehend genannten Aminogruppen, Nitrogruppen, Carboxygruppen, Cyanogruppen, Thiolgruppen oder Hydroxygruppen an die molekulare Monoschicht gebunden sein. Diese Modifizierung erfolgt vorzugsweise, nachdem die Vernetzung der Monoschicht sowie das Perforieren erfolgt ist. Beispiele für solche Liganden sind Ionentauscher, Chelatbildner, Aminosäuren, Coenzyme, Cofaktoren und deren Analoga, endokrine und exokrine Substanzen, wie Hormone, Enzym-Substrate, Enzym-Inhibitoren, Nukleinsäuren, wie DNA und RNA, Viren, und Polypeptide, wie Proteine, insbesondere Antikörper und Enzyme. Dem Fachmann sind geeignete Verfahren zur Anbindung solche Liganden bekannt.

In einer weiteren bevorzugten Ausführungsform der vorliegenden Erfindung weisen die niedermolekulare Aromaten die funktionelle Gruppe in einer terminalen Position derart auf, dass sich die funktionellen Gruppen nach Bildung der Monoschicht auf deren Oberfläche befinden.

Auf diese Weise ist es möglich, eine Membran herzustellen, bei der eine der beiden Oberflächen der molekularen Monoschicht durch funktionelle Gruppen modifiziert ist. Dies ist, wie vorstehend bereits dargestellt, insbesondere dann vorteilhaft, wenn die Membran als Adsorptionsmembran zur Abtrennung von bestimmten Stoffen verwendet werden soll.

In einer weiteren bevorzugten Ausführungsform der vorliegenden Erfindung werden mindestens zwei perforierte molekulare Monoschichten übereinander angeordnet, um einen Stapel zu bilden. Vorzugsweise werden dabei 2 bis 100 Monoschichten übereinander angeordnet, besonders bevorzugt werden 2 bis 50, noch bevorzugter 2 bis 10 Monoschichten übereinander angeordnet. Auf diese Weise kann eine Membran erhalten werden, die eine Dicke im Bereich von 1 bis 200 nm aufweist.

In einer weiteren bevorzugten Ausführungsform umfasst das erfindungsgemäße Verfahren weiter den abschließenden Schritt des Aufbringens einer zusätzlichen Beschichtung auf die Membran. Die Beschichtung kann beispielsweise eine Metallbeschichtung sein. Vorzugsweise handelt es sich bei der Beschichtung um eine Beschichtung aus Gold. Die Beschichtung kann jede geeignete Dicke aufweisen. Vorzugsweise weist die Beschichtung jedoch eine Dicke im Bereich von 1 nm bis 10 nm auf, besonders bevorzugt im Bereich von 2 nm bis 5 nm. Die Beschichtung kann durch im Stand der Technik bekannte Verfahren aufgebracht werden, beispielsweise durch Aufdampfen.

Die Membran gemäß der vorliegenden Erfindung ist mechanisch stabiler als herkömmliche Membranen. Darüber hinaus lassen sich die mechanische Festigkeit, die elektrische Leitfähigkeit sowie die Permeabilität bei der erfindungsgemäßen Nanomembran über einen weiten Bereich einstellen. Dies kann beispielsweise durch die Modifizierung mit funktionellen Gruppen, die Auswahl der Anzahl und Größe der Öffnungen, und durch Variation in der Dicke der Membran durch Stapelung von einzelnen Monoschichten oder durch Variation der Moleküllänge der die molekularen Monoschichten aufbauenden Aromaten erfolgen.

Die vorliegende Erfindung betrifft ferner die Verwendung der erfindungsgemäßen Membran als Membranfilter oder Adsorptionsmembran zur Trennung von Stoffgemischen. Insbesondere bevorzugt ist die Verwendung in der Filtration oder Trennung von Gasen und Flüssigkeiten. Besonders bevorzugt ist die Verwendung der erfindungsgemäßen Membran in der Lebensmittel-, Trinkwasser- oder Abwasseranalytik, zur Aufreinigung von Trinkwasser oder Abwasser, in der Medizin, beispielsweise in der Dialyse, in Batterien oder in Brennstoffzellen.

Die vorliegende Erfindung betrifft weiterhin die Verwendung der nach den erfindungsgemäßen Verfahren erhältlichen Membran als Membranfilter oder Adsorptionsmembran zur Trennung von Stoffgemischen. Insbesondere bevorzugt ist die Verwendung in der Filtration oder Trennung von Gasen und Flüssigkeiten. Besonders bevorzugt ist die Verwendung in der Lebensmittel-, Trinkwasser- oder Abwasseranalytik, zur Aufreinigung von Trinkwasser oder Abwasser, in der Medizin, beispielsweise in der Dialyse, in Batterien oder in Brennstoffzellen.

In einer anderen bevorzugten Ausführungsform der vorliegenden Erfindung wird die erfindungsgemäße Membran in der Sensorik verwendet. In einer weiteren bevorzugten Ausführungsform der vorliegenden Erfindung wird die nach den erfindungsgemäßen Verfahren erhältliche Membran in der Sensorik verwendet.

Die vorliegende Erfindung wird durch das nachstehende, nicht-beschränkende Beispiel weiter erläutert.

### Beispiel 1:

Es wurde zunächst eine Nitrobiphenylthiol-Monolayer mittels EUV-IL vernetzt. Dabei wurden kreisförmige Öffnungen mit Durchmessern im Bereich von 300 nm bis 30 nm gebildet, wobei die Abstände zwischen den einzelnen Öffnungen 300 nm bis 100 nm betrugen. Die Größe und Positionen der Öffnungen wurde mittels Transmissionselektronenmikroskopie bestimmt. Anschließend wurden die erhaltenen Nanomembranen mit einem Goldfilm einer Dicke im Bereich von 2 nm bis 5 nm beschichtet.

## Patentansprüche

1. Verfahren zum Herstellen einer Membran, welche mindestens eine molekulare Monoschicht umfasst, die aus niedermolekularen Aromaten aufgebaut und in lateraler Richtung vernetzt ist, wobei die Membran eine Dicke im Bereich von 1 bis 200 nm und eine Perforation in Form von mindestens 10³ Öffnungen mit einem Durchmesser, gemessen mittels Transmissionselektronenmikroskopie, im Bereich von 0,1 nm bis 1 µm pro mm² der Oberfläche der Membran aufweist, wobei die Öffnungen nicht mehr als 80% der Oberfläche der Membran ausmachen, und wobei die molekulare Monoschicht aus Aromaten, ausgewählt aus der Gruppe, bestehend Phenyl, Biphenyl, Terphenyl, Naphthalin, Anthracen, Bipyridin, Terpyridin, Thiophen, Bithienyl, Terthienyl, Pyrrol und Kombinationen davon, aufgebaut ist, wobei das Verfahren die Schritte umfasst:
(a) das Bereitstellen eines Substrates,
(b) das Aufbringen einer Monoschicht aus niedermolekularen Aromaten unter Bindung auf mindestens eine Oberfläche des Substrates,
(c) das Behandein des in Schritt (b) erhaltenen Substrates mit energiereicher Strahlung derart, dass die aus niedermolekularen Aromaten aufgebaute Monoschicht in lateraler Richtung vernetzt wird, und
(d) das Entfernen des Substrates, um die Membran zu erhalten,
wobei das Verfahren weiter während Schritt (c) oder nach einem der vorstehend genannten Schritte (c) und (d) den Schritt umfasst:
(e) das gezielte Perforieren der Membran, welches derart erfolgt, dass Öffnungen mit einem Durchmesser im Bereich von 0,1 nm bis 1 µm erzeugt werden,
und gegebenenfalls weiter den Schritt des übereinander Anordnens von mindestens zwei perforierten molekularen Monoschichten, um einen Stapel zu bilden,
wobei das Perforieren zwischen den Schritten (c) und (d) oder nach dem Schritt (d) durch Bestrahlung mit Teilchenstrahlung, ausgewählt aus der Gruppe, bestehend aus Elektronenstrahlung und Ionenstrahlung, erfolgt, oder
wobei das Perforieren dadurch erfolgt, dass die Vernetzung in Schritt (c) derart unvollständig erfolgt, dass eine Monoschicht mit vernetzten und unvernetzten Bereichen gebildet wird, wobei die unvernetzten Bereiche der Monoschicht entfernt werden, wodurch die Perforation ausgebildet wird.

2. Verfahren nach Anspruch 1, wobei die Vernetzung durch die Ausleuchtung einer Fläche mittels kohärenter EUV-Strahlung erfolgt, wobei zwei oder mehr kohärente EUV-Strahlen auf der Oberfläche der Monoschicht ein Interferenzmuster aus stehenden Wellen erzeugen, welches zu einer selektiven Belichtung und damit einer Strukturierung führt.

3. Verfahren nach Anspruch 1 oder 2, wobei das Bestrahlen in Schritt (c) mittels Elektronenstrahlung, Plasmastrahlung, Röntgenstrahlung, β-Strahlung, γ-Strahlung, UV-Strahlung oder EUV-Strahlung erfolgt.

4. Verfahren nach einem der Ansprüche 1 bis 3, wobei das Aufbringen in Schritt (b) mittels Tauch-, Gieß-, Spinschleuderverfahren oder durch Adsorption aus Lösung erfolgt.

5. Verfahren nach einem der Ansprüche 1 bis 4, wobei es sich bei dem Aromaten um Biphenyl handelt, das über eine Thiolgruppe als Ankergruppe an das Substrat kovalent gebunden wird.

6. Verfahren nach einem der Ansprüche 1 bis 5, wobei zumindest teilweise niedermolekulare Aromaten, die mindestens eine funktionelle Gruppe aufweisen, verwendet werden, wodurch eine Membran erhalten wird, bei der eine der beiden Oberflächen der molekularen Monoschicht durch funktionelle Gruppen modifiziert ist.

7. Verfahren nach einem der Ansprüche 1 bis 6, wobei mindestens zwei perforierte molekulare Monoschichten übereinander angeordnet werden, um einen Stapel zu bilden.

8. Membran, welche mindestens eine molekulare Monoschicht umfasst, die aus niedermolekularen Aromaten aufgebaut und in lateraler Richtung vernetzt ist, wobei die Membran eine Dicke im Bereich von 1 bis 200 nm und eine Perforation in Form von mindestens 10³ Öffnungen mit einem Durchmesser, gemessen mittels Transmissionselektronenmikroskopie, im Bereich von 0,1 nm bis 1 µm pro mm² der Oberfläche der Membran aufweist, und wobei die Öffnungen nicht mehr als 80% der Oberfläche der Membran ausmachen, hergestellt nach einem Verfahren gemäß der Ansprüche 1 bis 7.

9. Membran nach Anspruch 8, welche aus einem Stapel von mindestens zwei übereinander angeordneten molekularen Monoschichten aufgebaut ist.

10. Membran nach Anspruch 8 oder 9, wobei die Membran mindestens 10⁸ Öffnungen pro mm² der Oberfläche der Membran als Perforation aufweist.

11. Membran nach einem der Ansprüche 8 bis 10, wobei eine der beiden Oberflächen von mindestens einer molekularen Monoschicht durch funktionelle Gruppen modifiziert ist.

12. Membran nach Anspruch 11, wobei eine der beiden Oberflächen von mindestens einer molekularen Monoschicht durch Aminogruppen als funktionelle Gruppen modifiziert ist.

13. Verwendung der Membran nach einem der Ansprüche 8 bis 12 als Membranfilter oder Adsorptionsmembran zur Trennung von Stoffgemischen.

14. Verwendung nach Anspruch 13 in der Lebensmittel-, Trinkwasser- oder Abwasseranalytik, zur Aufreinigung von Trinkwasser oder Abwasser, in der Medizin, beispielsweise in der Dialyse, in Batterien oder in Brennstoffzellen.

15. Verwendung der Membran nach einem der Ansprüche 8 bis 12 in der Sensorik.

## Claims

1. A method for producing a membrane which comprises at least one molecular monolayer composed of low-molecular aromatics and cross-linked in the lateral direction, wherein the membrane has a thickness in the range from 1 to 200 nm and a perforation in the form of at least 10³ openings having a diameter measured by transmission electron microscopy in the range from 0.1 nm to 1 µm per mm² of the surface of the membrane, wherein the openings account for not more than 80% of the surface of the membrane, and wherein the molecular monolayer is composed of aromatics selected from the group consisting of phenyl, biphenyl, terphenyl, naphthaline, anthracene, bipyridine, terpyridine, thiophene, bithienyl, terthienyl, pyrrole, and combinations thereof, the method comprising the steps of:
(a) providing a substrate,
(b) applying a monolayer of low-molecular aromatics to at least one surface of the substrate by bonding,
(c) treating the substrate obtained in step (b) with high-energy radiation such that the monolayer composed of low-molecular aromatics is cross-linked in the lateral direction, and
(d) removing the substrate to obtain the membrane,
wherein the method further comprises, during step (c) or after one of the above-mentioned steps (c) and (d), the step of:
(e) perforating the membrane in a targeted way, which is performed such that openings having a diameter in the range from 0.1 nm to 1 µm are produced, and optionally further comprising the step of arranging one on top of the other of at least two perforated, molecular monolayers to form a stack,
wherein perforating between the steps (c) and (d) or after the step (d) is performed by irradiation with particle radiation selected from the group consisting of electron radiation and ion radiation, or
wherein perforating takes place in that the cross-linking in step (c) is performed in an incomplete way such that a monolayer with cross-linked and uncross-linked regions is formed, wherein the uncross-linked regions of the monolayer are removed, whereby the perforation is formed.

2. The method according to claim 1, wherein the cross-linking is performed by illuminating an area by means of coherent EUV radiation, wherein two or more coherent EUV beams create an interference pattern of standing waves on the surface of the monolayer, the interference pattern leading to a selective illumination and thus a structuring.

3. The method according to claim 1 or 2, wherein the irradiation in step (c) is performed with electron radiation, plasma radiation, X-ray radiation, β-radiation, γ-radiation, UV radiation or EUV radiation.

4. The method according to any one of claims 1 to 3, wherein the application in step (b) is performed by dipping, pouring, spinning methods, or by adsorption from solution.

5. The method according to any one of claims 1 to 4, wherein the aromatic is biphenyl, which is covalently bonded to the substrate via a thiol group as an anchor group.

6. The method according to any one of claims 1 to 5, wherein at least partially low-molecular aromatics having at least one functional group are used, whereby a membrane is obtained in which one of the two surfaces of the molecular monolayer is modified by functional groups.

7. The method according to any one of claims 1 to 6, wherein at least two perforated, molecular monolayers are arranged one on top of the other to form a stack.

8. A membrane, which comprises at least one molecular monolayer composed of low-molecular aromatics and cross-linked in the lateral direction, wherein the membrane has a thickness in the range from 1 to 200 nm and a perforation in the form of at least 10³ openings having a diameter measured by transmission electron microscopy in the range from 0.1 nm to 1 µm per mm² of the surface of the membrane, and wherein the openings account for not more than 80% of the surface of the membrane, produced according to the method of any one of claims 1 to 7.

9. The membrane according to claim 8, which is composed of a stack of at least two molecular monolayers arranged one on top of the other.

10. The membrane according to claim 8 or 9, wherein the membrane has at least 10⁸ openings per mm² of the surface of the membrane as a perforation.

11. The membrane according to any one of claims 8 to 10, wherein one of the two surfaces of at least one molecular monolayer is modified by functional groups.

12. The membrane according to claim 11, wherein one of the two surfaces of at least one molecular monolayer is modified by amino groups as functional groups.

13. A use of the membrane according to any one of claims 8 to 12 as a membrane filter or an adsorption membrane for separating mixtures of substances.

14. The use according to claim 13 in food, drinking water, or waste water analytics, for the purification of drinking water or waste water, in the medical field, for example in the field of dialysis, in batteries or in fuel cells.

15. A use of the membrane according to any one of claims 8 to 12 in sensor technology.

## Revendications

1. Procédé de fabrication d'une membrane qui comporte au moins une couche monomoléculaire constituée de composés aromatiques à faible poids moléculaire réticulés en direction latérale, la membrane présentant une épaisseur de l'ordre de 1 à 200 nm et une perforation sous forme d'au moins 10³ perçages ayant un diamètre, mesuré à l'aide d'un microscope électronique à transmission, de l'ordre de 0.1 nm à 1 µm par mm² de surface de la membrane, les perçages ne représentant pas plus de 80 % de la surface de la membrane, et la couche monomoléculaire étant constituée de composés aromatiques choisis parmi le groupe constitué par le phényle, le biphényle, le terphényle, la naphthaline, l'anthracène, la bipyridine, la terpyridine, le thiophène, le bithiényle, le terthiényle, le pyrrole et des combinaisons de ceux-ci, le procédé comportant les étapes suivantes :.
(a) la mise à disposition d'un substrat,
(b) l'application d'une couche monomoléculaire de composés aromatiques de faible poids moléculaire et liaison sur au moins l'une des surfaces du substrat,
(c) le traitement du substrat obtenu sous (c) à l'aide d'un rayonnement hautement énergétique de manière à réticuler latéralement la couche monomoléculaire de composés aromatiques, et
(d) le retrait du substrat afin d'obtenir la membrane,
le procédé comportant, pendant l'étape (c) ou après l'une des étapes susmentionnées (c) et (d), l'étape suivante :
(e) le perçage ciblé de la membrane de manière à obtenir des perçages ayant un diamètre de l'ordre de 0,1 nm à 1 µm,
et éventuellement encore l'étape de l'agencement l'une sur l'autre d'au moins deux couches monomoléculaires perforées afin de former un empilement, le perçage entre les étapes (c) et (d) ou à la suite de l'étape (d) étant effectué par rayonnement de particules, choisi parmi le groupe constitué par les rayonnements d'électrons et les rayonnements d'ions, ou bien le perçage est effectué par le fait que la réticulation effectuée à l'étape (c) est incomplète de telle sorte qu'on forme une couche monomoléculaire avec des zones réticulées et des zones non-réticulées, et que l'on élimine les parties non-réticulées de la couche monomoléculaire pour former les perçages.

2. Procédé selon la revendication 1 dans lequel la réticulation est effectuée par irradiation d'une surface à l'aide d'un rayonnement UVE cohérent, deux ou plusieurs rayonnements UVE cohérents générant un motif d'interférence d'ondes stationnaires sur la surface de la couche monomoléculaire, motif qui génère une irradiation sélective et, de ce fait, une structuration.

3. Procédé selon la revendication 1 ou 2 dans lequel le rayonnement de l'étape (c) est effectué à l'aide de rayons d'électrons, de rayons de plasma, de rayons X, de rayons β, de rayons y, de rayons UV ou de rayons UVE.

4. Procédé selon l'une des revendications 1 à 3 dans lequel l'application de l'étape (b) est effectuée à l'aide d'un procédé d'immersion, de coulage, de centrifugation ou par adsorption à partir d'une solution.

5. Procédé selon l'une des revendications 1 à 4 dans lequel le composé aromatique est un biphényle qui est lié de manière covalente au substrat par un groupe thiol servant de groupe d'ancrage.

6. Procédé selon l'une des revendications 1 à 5 dans lequel on utilise au moins partiellement des composés aromatiques à faible poids moléculaire qui comportent au moins un groupe fonctionnel, de manière à obtenir une membrane dont l'une des deux surfaces de la couche monomoléculaire est modifiée par des groupes fonctionnels.

7. Procédé selon l'une des revendications 1 à 6 dans lequel on agence au moins deux couches monomoléculaires perforées l'une sur l'autre de manière à former un empilement.

8. Membrane comportant au moins une couche monomoléculaire constituée de composés aromatiques à faible poids moléculaire réticulés en direction latérale, la membrane présentant une épaisseur de l'ordre de 1 à 200 nm et une perforation sous forme d'au moins 10³ perçages ayant un diamètre, mesuré à l'aide d'un microscope électronique à transmission, de l'ordre de 0.1 nm à 1 µm par mm² de surface de la membrane, les perçages ne représentant pas plus de 80 % de la surface de la membrane, obtenue selon le procédé de l'une des revendications 1 à 7.

9. Membrane selon la revendication 8 constituée par un empilement d'au moins deux couches monomoléculaires superposées.

10. Membrane selon la revendication 8 ou 9 comportant au moins 10⁸ perçages par mm² de surface de la membrane.

11. Membrane selon l'une des revendications 8 à 10 dans laquelle l'une des deux surfaces d'au moins une couche monomoléculaire est modifiée par des groupes fonctionnels.

12. Membrane selon la revendication 11 dans laquelle l'une des deux surfaces d'au moins une couche monomoléculaire est modifiée par des groupes amine servant de groupes fonctionnels.

13. Utilisation de la membrane selon l'une des revendications 8 à 12 en tant que filtre à membrane ou membrane d'adsorption pour la séparation de mélanges.

14. Utilisation selon la revendication 13 dans le domaine de l'analyse des aliments, de l'eau potable ou des eaux usées, pour la purification d'eau potable ou des eaux usées, en médecine, par exemple en dialyse, dans des batteries ou dans des piles à combustible.

15. Utilisation de la membrane selon l'une des revendications 8 à 12 dans les systèmes de détection.
